# EUROPÄISCHE PATENTSCHRIFT

(11) **EP 2 795 768 B1**
(45) Veröffentlichungstag und Bekanntmachung des Hinweises auf die Patenterteilung: **28.04.2021**
(21) Anmeldenummer: 12798610.7
(22) Anmeldetag: 29.11.2012
(51) Int. Cl.: H02K 5/10, H02K 7/116, H02K 5/124

(54) **ANTRIEB, UMFASSEND GETRIEBEMOTOR**
DRIVE UNIT COMPRISING A GEARED MOTOR
ENTRAÎNEMENT COMPRENANT UN MOTORÉDUCTEUR

(30) Priorität: 21.12.2011 DE 102011121786
(43) Veröffentlichungstag der Anmeldung: 29.10.2014
(73) Patentinhaber: SEW-EURODRIVE GmbH & Co. KG, 76646 Bruchsal (DE)
(72) Erfinder: ÖZCAN, Abdulvahap, 68753 Waghäusel (DE); BOERMANN, Friedrich, 76694 Forst (DE)
(86) Internationale Anmeldenummer: PCT/EP2012/004925
(87) Internationale Veröffentlichungsnummer: WO 2013/091769

(56) Entgegenhaltungen:
- DE-A1-102005 009 601
- DE-C- 353 322
- JP-A- H06 253 495
- JP-A- S56 150 943
- JP-U- H02 104 753
- US-B1- 6 376 949

## Beschreibung

Die Erfindung betrifft einen Antrieb, umfassend einen Getriebemotor.

Es ist allgemein bei Getriebemotoren bekannt, ein schmierölbefülltes Getriebe einzusetzen, die zur Abdichtung des Getriebeinneren gegen die Umgebung einen Wellendichtring aufweisen.

Aus der JP S 56 150943 A ist ein Antrieb, umfassend Getriebemotor, offenbart, wobei der Getriebemotor einen Elektromotor und ein Getriebe aufweist, wobei die Rotorwelle über ein Lager in einem Lagerflansch gelagert ist und
mittels eines am Lagerflansch vorgesehenen Wellendichtrings gegen den Lagerflansch abgedichtet ist,
wobei abtriebsseitig Öl vorgesehen ist,
wobei mit der Rotorwelle ein Schleuderring drehfest verbunden ist, welchem ein mit einem Gehäuseteil verbundener Ableitring zugeordnet ist,
wobei der Schleuderring axial auf der dem Rotor des Elektromotors zugewandten Seite des Wellendichtrings angeordnet ist,
wobei die Rotorwellenachse im Wesentlichen parallel zur Gravitationsachse ausgerichtet ist
wobei der Ableitring eine in Umfangsrichtung umlaufende Rinne ausbildet, in der das abgeschleuderte Öl aufgefangen wird,
wobei von besagter Rinne nach radial außen eine Bohrung angeordnet ist.

Aus der JP H 06 253495 A ist ein Schmiernippel für einen vertikal montierten Elektromotor bekannt.

Aus der JP H 021 04753 U ist eine Dichtungsanordnung für eine Welle bekannt.

Aus der DE 10 2005 009 601 A1 ist ein Verfahren zur Überwachung eines Antriebs bekannt.

Aus der US 6 376 949 B1 ist ein elektrischer Motor mit Flüssigkeitsdrainage-Schnittstelle bekannt.

Aus der DE 353 322 C ist eine Vorrichtung zum Abdichten einer durch zwei Räume geführten Welle bekannt.

Der Erfindung liegt daher die Aufgabe zugrunde, einen Antrieb weiterzubilden, wobei die Sicherheit verbessert sein soll.

Erfindungsgemäß wird die Aufgabe bei dem Antrieb nach den in Anspruch 1 angegebenen Merkmalen gelöst.

Wichtige Merkmale der Erfindung bei dem Antrieb, umfassend Getriebemotor, sind, dass die Rotorwelle über ein Lager in einem Lagerflansch gelagert ist und mittels eines am Lagerflansch vorgesehenen Wellendichtrings gegen den Lagerflansch abgedichtet ist,
wobei abtriebsseitig Öl vorgesehen ist,
wobei mit der Rotorwelle ein Schleuderring drehfest verbunden ist, welchem ein mit einem Gehäuseteil verbundener Ableitring zugeordnet ist,
wobei der Schleuderring axial auf der dem Rotor des Elektromotors zugewandten Seite des Wellendichtrings angeordnet ist.

Von Vorteil ist dabei, dass bei Leckage das Öl entlang der Rotorwelle am Wellendichtring vorbei fließt und zum Schleuderring gelangt. Da dieser einen höheren Außenradius aufweist als die Rotorwelle, wird Öl abgeschleudert in den Ableitring, welcher den Schleuderring außen umgibt, oder das Öl fließt an der schrägen Kante, insbesondere Konus, ab zum Ableitring. Somit fließt das Öl bei nicht drehendem Getriebe an dem Konus ab und tropft in die Vertiefung des Ableitrings. Bei drehendem Getriebe hingegen wird das Öl abgeschleudert in die Vertiefung des Ableitrings.

Erfindungsgemäß weist der Schleuderring auf seiner dem Wellendichtring zugewandten Oberfläche eine derartige Schrägung auf, dass der Radialabstand der Oberfläche mit zunehmendem axialen Abstand vom Wellendichtring monoton oder streng monoton zunimmt, bis zu demjenigen Oberflächenpunkt, welcher den höchsten Radialabstand aufweist. Von Vorteil ist dabei, dass ein Abfließen des Öls auch bei nicht drehendem Getriebe bewirkbar ist. Vorzugsweise ist die Schräge derart ausgeführt, dass der Radialabstand mit zunehmendem axialen Abstand zum Wellendichtring proportional zunimmt. Am radial äußeren Ende ist auch eine Rundung vorsehbar.

Bei einer vorteilhaften Ausgestaltung weist der Schleuderring auf seiner vom Wellendichtring abgewandten Oberfläche eine ringförmige Vertiefung auf,
insbesondere in welche eine zumindest in axialer Richtung hervorragende Erhebung des Ableitrings zumindest teilweise hineinreicht. Von Vorteil ist dabei, dass mittels der Vertiefung ein Sammelkanal gebildet ist.

Bei einer vorteilhaften Ausgestaltung weist der Ableitring an seiner dem Wellendichtring zugewandten Seite eine umlaufende Vertiefung auf, in welche eine im Lagerflansch angeordnete Bohrung mündet. Von Vorteil ist dabei, dass ein Ableiten des Öls in den Außenraum ermöglicht ist.

Von Vorteil ist bei der Erfindung, dass ein Ableiten in eine Anschlussvorrichtung für einen Schlauch oder für ein Rohr ermöglicht ist. Hierzu ist als Anschlussvorrichtung der Nippel verwendet.

Bei einer vorteilhaften Ausgestaltung weist der Rotor des Elektromotors als Aktivteil einen Dauermagnet und/oder einen Kurzschlusskäfig auf. Von Vorteil ist dabei, dass der Motor als Synchronmotor beziehungsweise Asynchronmotor ausführbar ist.

Von Vorteil ist bei der Erfindung, dass ein Eindringen des Öls in den Bereich des Aktivteils oder axial weiter verhindert ist. Somit sind auch axial weiter vom Wellendichtring entfernt angeordnete Komponenten schützbar vor dem Öl.

Von Vorteil ist bei der Erfindung, dass der Winkelsensor mit optischen Erfassungsmitteln ausstattbar ist. Denn das Öl kann nicht bis zum Winkelsensor gelangen, da es schon von dem Schleuderring abgefangen ist.

Von Vorteil ist bei der Erfindung, dass auch bei nicht drehendem Motor ein Abfließen des Öls ermöglicht ist, da der Schleuderring eine Schräge, insbesondere Konusform, aufweist, so dass das Öl entlang der Rotorwelle und dann entlang der Schräge abfließt.

Von Vorteil ist bei der Erfindung, dass die Sicherheit erhöht ist. Denn selbst bei einem Leckagebedingten Eindringen von Öl in den Motorinnenraum ist ein Ableiten des Öls erreicht.

Weitere Vorteile ergeben sich aus den Unteransprüchen.

Die Erfindung wird nun anhand von Abbildungen näher erläutert:

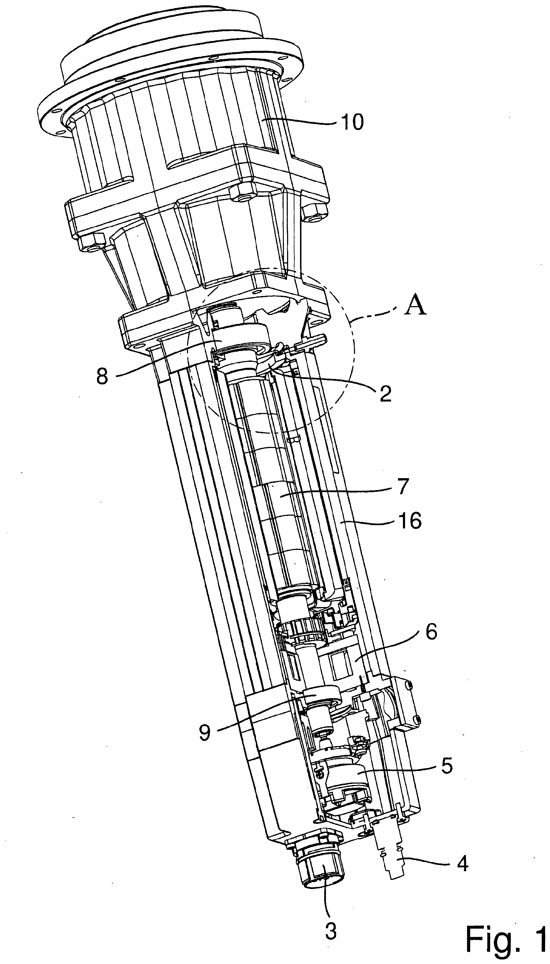

In der Figur 1 ist ein erfindungsgemäßes Ausführungsbeispiel in Schrägansicht gezeigt, wobei der erfindungsgemäße Elektromotor angeschnitten ist.

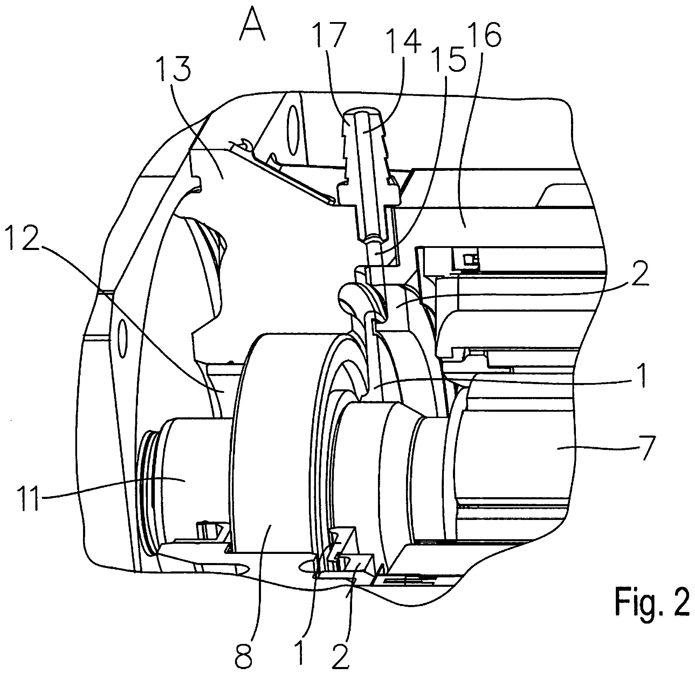

In der Figur 2 ist ein vergrößerter Ausschnitt der Figur 1 gezeigt.

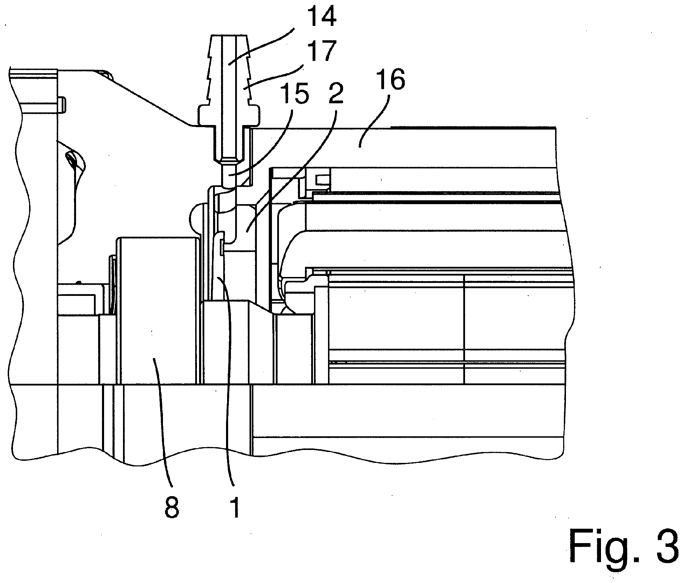

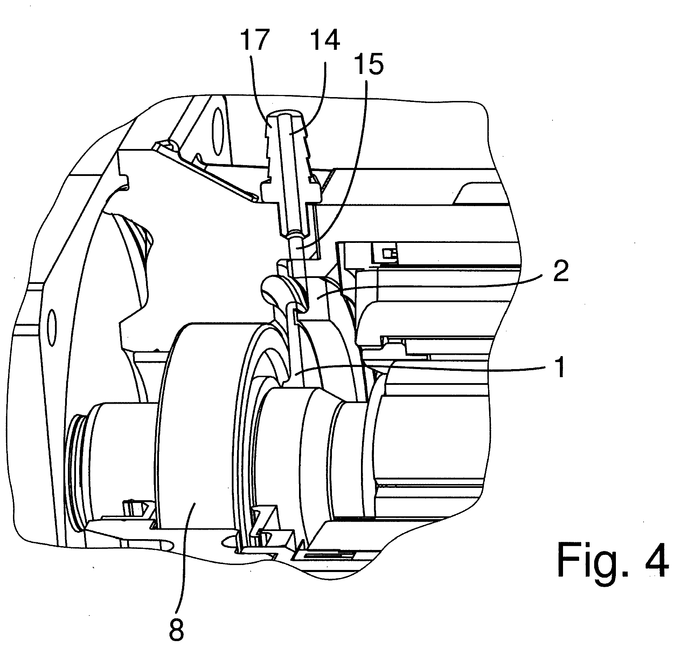

In der Figur 3 ist eine zugehörige Schnittansicht gezeigt.

Der Elektromotor weist eine Rotorwelle 11 auf, auf der ein Schleuderring 1 drehfest verbunden ist.

Am Statorgehäuse 16 ist ein Ableitring 2 verbunden zum Ableiten des vom Schleuderring 1 abgeschleuderten oder abtropfenden Öls.

Am Gehäuse des Elektromotors ist außerdem ein Steckverbinderteil 3 für Leistungsversorgung und ein Steckverbinderteil 4 für Signalübertragung des an der Rotorwelle 11 verbundenen Winkelsensors 5 vorgesehen.

Außerdem ist erfindungsgemäß an der dem Getriebe abgewandten Seite des Elektromotors nicht nur der Winkelsensor 5 sondern auch eine elektromagnetisch betätigbare Bremse angeordnet, deren Bremsspule 6 mit dem Gehäuse des Elektromotors und somit auch mit dem Statorgehäuseteil 16 verbunden ist.

Als Aktivelemente zur Erzeugung des motorischen Drehmoments sind Dauermagnete 7 auf der Rotorwelle 11 angeordnet.

Die Rotorwelle 11 ist über ein bremsenseitiges Lager 9 im Gehäuse des Motors und über ein getriebeseitiges Lager 8 im mit dem Gehäuse des Motors verbundenen Lagerflansch 13 gelagert.

Der Lagerflansch 13 ist mit dem Getriebegehäuse 10 verbunden.

Zwischen Lagerflansch 13 und Rotorwelle 11 ist ein Wellendichtring 12 vorgesehen, der somit das schmierölbefüllte Getriebeinnere gegen das Motorinnere abdichtet. Der Wellendichtring 12 ist im Lagerflansch angeordnet. Eine Dichtlippe des Wellendichtrings 12 läuft auf der Rotorwelle 11.

Bei eventuellem Versagen des Wellendichtrings 12 dringt Schmieröl an der Rotorwelle 11 entlang ins Motorinnere.

Hierzu ist der Schleuderring 1 an der Rotorwelle 11 angeordnet. Das eingedrungene Schmieröl muss somit am Schleuderring 1 entlang nach radial außen laufen. Da auf höherem Radialabstand aber größere Umfangsgeschwindigkeiten herrschen, wird das Öl von dort abgeschleudert.

Das abgeschleuderte Öl wird erfindungsgemäß in einer in Umfangsrichtung umlaufenden Rinne des Ableitrings 2 aufgefangen. Von dieser Rinne ist erfindungsgemäß nach radial außen eine Bohrung 15 angeordnet, die in einen Kanal 14 eines mit dem Lagerflansch 13 schraubverbundenen erfindungsgemäßen Nippels 17 mündet. An der Außenseite des Nippels 17 ist erfindungsgemäß ein Schlauch zur weiteren Ableitung des Öls vorgesehen. Hierbei ist es erfindungsgemäß ermöglicht, einen Sensor zur Detektion des ausgetretenen Öls am Ableitring 2, am Kanal 14 oder an der Bohrung 15 vorzusehen, so dass bei ausgetretenem und abgeleitetem Öl dieser Sensor erfindungsgemäß als Leckage-Sensor betreibbar ist.

Vorteiligerweise ist somit verhindert, dass Öl in den Bereich der Bremse oder in den Bereich des Winkelsensors 5 gelangt. Eine Fehlfunktion derselben ist somit auch verhindert.

Damit auch bei undichtem Wellendichtring 12 und ausgeschaltetem Motor das Öl abgeleitet wird, weist der Schleuderring 1 eine Außenkontur mit Schräge auf. Hierzu wächst also der größte Radialabstand an der Oberfläche des Schleuderrings 1, insbesondere zumindest in dessen radial äußeren Endbereich, mit axial zunehmender Entfernung vom Getriebe, also von der Abtriebsseite des Motors, an, insbesondere monoton oder gar streng monoton.

Erfindungsgemäß ist hierbei das Getriebe höher als die Bremse angeordnet, erfindungsgemäß also die Rotorwellenachse im Wesentlichen parallel zur Gravitationsachse.

An der vom Getriebe beziehungswiese von der Abtriebsseite abgewandten Seite des Schleuderrings 1 ist eine umlaufende Vertiefung, insbesondere Nut, angeordnet. Dieser Nut axial gegenüberstehend ist eine Erhebung des Ableitrings 2 zugeordnet.

Von dieser Erhebung ausgehend weist der Ableitring 2 als Rinne eine Kontur auf, bei der der Radialabstand mit zunehmender axialen Entfernung vom Getriebe oder von der Antriebsseite monoton oder gar streng monoton zunimmt.

Somit ist eine Sicherheit gegen bei Leckage des Wellendichtrings austretendes Öl geschaffen.

Bei einem weiteren bevorzugten Ausführungsbeispiel sind zur weiteren Erhöhung der Sicherheit mehrere Schleuderringe 1 axial hintereinander angeordnet.

### Bezugszeichenliste

1 Schleuderring
2 Ableitring
3 Steckverbinderteil
4 Steckverbinderteil
5 Winkelsensor
6 Bremsspule der elektromagnetisch betätigbaren Bremse
7 Dauermagnete
8 Lager
9 Lager
10 Getriebegehäuse
11 Rotorwelle
12 Wellendichtring
13 Lagerflansch
14 Kanal
15 Bohrung
16 Statorgehäuse
17 Nippel

## Patentansprüche

1. Antrieb, umfassend Getriebemotor,
wobei der Getriebemotor einen Elektromotor und ein Getriebe aufweist, wobei an der dem Getriebe abgewandten Seite des Elektromotors ein Winkelsensor sowie eine elektromagnetisch betätigbare Bremse, deren Bremsspule mit dem Gehäuse des Elektromotors und somit auch dem Statorgehäuseteil (16) verbunden ist, angeordnet ist,
wobei die Rotorwelle (11) über ein Lager (8) in einem Lagerflansch (13) gelagert ist und
mittels eines am Lagerflansch (13) vorgesehenen Wellendichtrings (12) gegen den Lagerflansch (13) abgedichtet ist,
wobei abtriebsseitig Öl vorgesehen ist,
wobei mit der Rotorwelle (11) ein Schleuderring (1) drehfest verbunden ist, welchem ein mit einem Gehäuseteil verbundener Ableitring (2) zugeordnet ist,
wobei der Schleuderring (1) axial auf der dem Rotor des Elektromotors zugewandten Seite des Wellendichtrings (12) angeordnet ist,
wobei die Rotorwellenachse im Wesentlichen parallel zur Gravitationsachse ausgerichtet ist
wobei
der Schleuderring (1) auf seiner dem Wellendichtring (12) zugewandten Oberfläche eine derartige Schrägung aufweist, dass der Radialabstand der Oberfläche mit zunehmendem axialen Abstand vom Wellendichtring (12) monoton oder streng monoton zunimmt bis zu demjenigen Oberflächenpunkt, welcher den höchsten Radialabstand aufweist,
wobei ein Ableitring vorgesehen ist,
wobei der Ableitring eine in Umfangsrichtung umlaufende Rinne ausbildet, in der das abgeschleuderte Öl aufgefangen wird,
wobei von besagter Rinne nach radial außen eine Bohrung (15) angeordnet ist, die in einen Kanal (14) eines mit dem Lagerflansch (13) schraubverbundenen Nippels (17) mündet, wobei an der Außenseite des Nippels (17) ein Schlauch zur weiteren Ableitung des Öls vorgesehen ist,
wobei ein Sensor zur Detektion des ausgetretenen Öls am Ableitring (2), am Kanal (14) oder an der Bohrung (15) vorgesehen ist, so dass bei ausgetretenem und abgeleitetem Öl besagter Sensor als Leckage-Sensor betreibbar ist,
wobei das Getriebe höher als die Bremse angeordnet ist.

2. Antrieb nach Anspruch 1,
**dadurch gekennzeichnet, dass**
der Schleuderring (1) auf seiner vom Wellendichtring (12) abgewandten Oberfläche eine ringförmige Vertiefung aufweist,
insbesondere in welche eine zumindest in axialer Richtung hervorragende Erhebung des Ableitrings (2) zumindest teilweise hineinreicht.

3. Antrieb nach mindestens einem der vorangegangenen Ansprüche,
**dadurch gekennzeichnet, dass**
der Ableitring (2) an seiner dem Wellendichtring (12) zugewandten Seite eine umlaufende Vertiefung aufweist, in welche eine im Lagerflansch (13) angeordnete Bohrung (15) mündet.

4. Antrieb nach mindestens einem der vorangegangenen Ansprüche,
**dadurch gekennzeichnet, dass**
der Schleuderring (1) zumindest an seiner zum Wellendichtring (12) zugewandten Seite konusförmig ausgeformt ist.

5. Antrieb nach mindestens einem der vorangegangenen Ansprüche,
**dadurch gekennzeichnet, dass**
der Rotor des Elektromotors als Aktivteil einen Dauermagnet und/oder einen Kurzschlusskäfig aufweist.

## Claims

1. A drive, comprising a geared motor,
wherein the geared motor has an electric motor and a gear unit, wherein an angular sensor and also an electromagnetically actuatable brake, the brake coil of which is connected to the housing of the electric motor and hence also to the stator housing part (16), is arranged on that side of the electric motor which faces away from the gear unit, wherein the rotor shaft (11) is mounted in a bearing flange (13) by way of a bearing (8) and
is sealed off from the bearing flange (13) by means of a shaft sealing ring (12) provided on the bearing flange (13),
wherein oil is provided on the output side,
wherein a thrower ring (1) is connected non-rotatably to the rotor shaft (11), with which ring a discharge ring (2) connected to a housing part is associated,
wherein the thrower ring (1) is arranged axially on that side of the shaft sealing ring (12) which faces the rotor of the electric motor,
wherein the rotor-shaft axis is oriented substantially parallel to the gravitational axis,
wherein
the thrower ring (1) has on its surface which faces the shaft sealing ring (12) such an incline that the radial distance of the surface with increasing axial distance from the shaft sealing ring (12) increases monotonically or strictly monotonically up to that surface point which is at the greatest radial distance,
wherein a discharge ring is provided,
wherein the discharge ring forms a channel which runs around in the peripheral direction, in which the thrown-off oil is collected,
wherein a bore (15) is arranged radially outwards from said channel, which bore opens into a duct (14) of a nipple (17) screw-connected to the bearing flange (13), wherein a hose for further discharging of the oil is provided on the outside of the nipple (17), wherein a sensor for detecting the oil which has emerged is provided on the discharge ring (2), on the duct (14) or on the bore (15), so that in the event of oil which has emerged and been discharged said sensor can be operated as a leakage sensor, wherein the gear unit is arranged higher than the brake.

2. A drive according to claim 1,
**characterised in that**
the thrower ring (1) has an annular depression on its surface which faces away from the shaft sealing ring (12),
in particular into which an elevation, projecting at least in the axial direction, of the discharge ring (2) at least partially extends.

3. A drive according to at least one of the preceding claims,
**characterised in that**
the discharge ring (2) on its side facing the shaft sealing ring (12) has an encircling depression into which a bore (15) arranged in the bearing flange (13) opens.

4. A drive according to at least one of the preceding claims,
**characterised in that**
the thrower ring (1), at least on its side facing the shaft sealing ring (12), is formed in a cone-shape.

5. A drive according to at least one of the preceding claims,
**characterised in that**
the rotor of the electric motor has a permanent magnet and/or a squirrel cage as an active part.

## Revendications

1. Entraînement équipé d'un motoréducteur,
lequel motoréducteur comprend un moteur électrique et un engrenage, sachant qu'un capteur angulaire, ainsi qu'un frein pouvant être actionné électromagnétiquement, dont la bobine de freinage est raccordée au carter dudit moteur électrique, et donc également à la partie statorique (16) du carter, sont disposés du côté dudit moteur électrique qui pointe à l'opposé de l'engrenage,
l'arbre rotorique (11) étant logé dans un flasque de montage (13) par l'intermédiaire d'un palier (8) et
son étanchéité étant assurée, vis-à-vis du flasque de montage (13), au moyen d'une bague d'étanchement (12) prévue sur ledit flasque de montage (13),
sachant que de l'huile est prévue côté sortie,
sachant qu'une bague de projection (1), à laquelle est affectée une bague de détournement (2) reliée à une partie du carter, est reliée à l'arbre rotorique (11) avec verrouillage rotatif, ladite bague de projection (1) étant implantée, dans le sens axial, du côté de la bague (12) d'étanchement de l'arbre qui pointe vers le rotor du moteur électrique,
l'axe dudit arbre rotorique étant orienté, pour l'essentiel, parallèlement à l'axe gravitationnel,
sachant que
la bague de projection (1) comporte, sur sa surface pointant vers la bague (12) d'étanchement de l'arbre, une obliquité telle que l'espacement radial de ladite surface augmente de façon monotone ou strictement monotone, au fur et à mesure de l'accroissement de l'espacement axial par rapport à ladite bague (12) d'étanchement de l'arbre, jusqu'au point de ladite surface qui présente l'espacement radial maximal,
une bague de détournement étant prévue,
laquelle bague de détournement est munie d'une rainure périphérique dans la direction circonférentielle, dans laquelle l'huile projetée est recueillie,
sachant qu'un alésage (15), orienté radialement vers l'extérieur à partir de la rainure précitée, débouche dans un canal (14) d'un mamelon (17) relié par vissage au flasque de montage (13), un tuyau souple, dédié à la poursuite du détournement de l'huile, étant prévu à la face extérieure dudit mamelon (17),
un capteur, dévolu à la détection de l'huile déchargée, étant prévu au niveau de ladite bague de détournement (2), dudit canal (14) ou dudit alésage (15), de façon telle qu'en présence d'huile déchargée et détournée, le capteur précité puisse être employé en tant que détecteur de fuites,
sachant que l'engrenage est situé plus haut que le frein.

2. Entraînement selon la revendication 1,
**caractérisé par le fait que**
la bague de projection (1) est pourvue, sur sa surface pointant à l'opposé de la bague (12) d'étanchement de l'arbre, d'un renfoncement annuaire
dans lequel pénètre notamment, au moins en partie, une protubérance faisant saillie au-delà de la bague de détournement (2), au moins dans la direction axiale.

3. Entraînement selon au moins l'une des revendications précédentes,
**caractérisé par le fait que**
la bague de détournement (2) est dotée, sur son côté pointant vers la bague (12) d'étanchement de l'arbre, d'un renfoncement circonférentiel dans lequel débouche un alésage (15) pratiqué dans le flasque de montage (13).

4. Entraînement selon au moins l'une des revendications précédentes,
**caractérisé par le fait que**
la bague de projection (1) est de configuration tronconique au moins sur son côté pointant vers la bague (12) d'étanchement de l'arbre.

5. Entraînement selon au moins l'une des revendications précédentes,
**caractérisé par le fait que**
le rotor du moteur électrique est muni, en tant que partie active, d'un aimant permanent et/ou d'une cage de court-circuit.
